# EUROPÄISCHE PATENTANMELDUNG

(11) **EP 3 216 658 A1**
(43) Veröffentlichungstag der Anmeldung: **13.09.2017**
(21) Anmeldenummer: 17159730.5
(22) Anmeldetag: 07.03.2017
(51) Int. Cl.: B60R 16/023, B60G 15/00, B60G 17/00, B60R 16/03

(54) **AKTUATORSYSTEM FÜR EIN KRAFTFAHRZEUG**

(30) Priorität: 09.03.2016 LU 92990
(71) Anmelder: Ovalo GmbH, 65555 Limburg (DE)
(72) Erfinder:
(74) Vertreter: Grabovac, Dalibor

(57) **Zusammenfassung**

Die Erfindung betrifft ein Aktuatorsystem für ein Kraftfahrzeug. Das Aktuatorsystem beinhaltet wenigstens einen Aktuator, der mindestens einen elektrischen Antriebsmotor und ein Leistungselektronikmodul beinhaltet, an das der Antriebsmotor angeschlossen ist und das von einem räumlich separaten Logikelektronikmodul Ansteuervorgaben, insbesondere in Form eines pulsbreitenmodulierten Signals, empfängt und das entsprechend den empfangenen Ansteuervorgaben elektrische Antriebsenergie an den elektrischen Antriebsmotor des Aktuators überträgt, wobei das Logikelektronikmodul, das dazu ausgebildet ist, eine Einstellvorgabe zu empfangen und der Einstellvorgabe eine Ansteuervorgabe für das Leistungselektronikmodul zuzuordnen, die es an das Leistungselektronikmodul des Aktuators übergibt, wobei das Logikelektronikmodul die Ansteuervorgabe derart zuordnet, dass der Antriebsmotor die Einstellvorgabe einstellt.

## Beschreibung

Die Erfindung betrifft ein Aktuatorsystem für ein Kraftfahrzeug.

Aktuatoren werden in einem Kraftfahrzeug zu unterschiedlichen Zwecken eingesetzt. Ein Aktuator in einem Kraftfahrzeug, beispielsweise ein Aktuator eines aktiven Fahrwerks, ist üblicherweise an ein Steuergerät angeschlossen. Das Steuergerät ist ein elektronisches Modul, das den Aktuator steuert oder regelt und hierbei den Aktuator mit elektrischer Antriebsenergie versorgt. Um den Aktuator mit elektrischer Antriebsenergie versorgen zu können, muss das Steuergerät seinerseits über ausreichend dimensionierte Leitungen an die elektrischen Energiequellen des Kraftfahrzeugs angeschlossen sein. Über diese Leitungen und über die vom Steuergerät zum Aktuator verlaufenden Leitungen fließen je nach Anwendung sehr erhebliche elektrische Ströme. Darüber hinaus muss das Steuergerät dazu ausgebildet sein, Einstellvorgaben zu empfangen, die das Steuergerät über den Aktuator einstellt. Eine Einstellvorgabe kann beispielsweise ein bestimmter Höhenstand des Rades relativ zur Karosserie sein, der mittels eines aktiven Fahrwerks einzustellen ist.

In modernen Kraftfahrzeugen ist zumeist eine Vielzahl von Steuergeräten an unterschiedlichen Orten des Kraftfahrzeugs eingebaut. Zumeist sind die Steuergeräte in der Nähe der zu steuernden oder zu regelnden Aktuatoren angeordnet. Die Steuergeräte sind in aller Regel miteinander vernetzt und/oder an einen zentralen Fahrzeugcomputer angeschlossen.

Beispielsweise offenbart WO 2014 145018 A2 eine Vorrichtung, nämlich eine aktive Fahrzeugfederung, bei der jeweils ein Steuergerät vorhanden ist, das jeweils einen aktiven Federungsaktuator steuert und hierbei den Aktuator mit elektrischer Antriebsenergie versorgt.

Aus DE 198 32 531 A1 ist eine Steuerung für eine Mehrzahl von elektrischen

Verbrauchern eines Kraftfahrzeugs bekannt. Hierbei ist vorgesehen, dass jeder der elektrischen Verbraucher zusammen mit einem lokalen Rechner in einem Verbrauchermodul angeordnet ist und innerhalb des Verbrauchermoduls von dem zugehörigen lokalen Rechner gesteuert wird. Die lokalen Rechner stehen über einen Datenbus mit einem zentralen Rechner in Verbindung, mit dem sie nach einem einheitlichen Protokoll Steuerungsdaten austauschen.

Aus DE 102 58 753 B4 ist ein Datenbussystem mit mehreren Steuergeräten, die untereinander über einen Datenbus Nachrichten austauschen und die zur Steuerung von Komponenten vorgesehen sind, bekannt. Die einzelnen Steuergeräte sind modulartig aufgebaut und in unterschiedlichen Einbauräumen eingebaut. Außerdem sind die einzelnen Steuergeräte als verteilte Steuergeräte mit mehreren unabhängig voneinander anordenbaren und mit über einen internen Datenbus verbundenen Einzelmodulen aufgebaut. Die Einzelmodule eines Steuergerätes erzeugen Daten und Signale zur Ansteuerung der Komponenten, wobei in Bezug auf die Hardware identische Einzelmodule in unterschiedlichen Steuergeräten vorgesehen sind. Außerdem sind mindestens zwei unterschiedliche Typen von identischen Einzelmodulen in mehreren Steuergeräten vorgesehen.

Derzeit sind Steuergeräte, insbesondere Steuergeräte zum Steuern von Aktuatoren eines aktiven Fahrwerks oder Aktuatoren zum Einstellen unterschiedlicher Parameter eines Verbrennungsmotors, oftmals an Stellen verbaut, an denen sie besonderen Belastungen, insbesondere durch Schmutz und/oder durch Hitze ausgesetzt sind. Die empfindlichen Bauelemente der Steuergeräte müssen daher aufwendig vor derartigen Einwirkungen, die die Funktionsfähigkeit beeinträchtigen oder gar zerstören können, geschützt werden.

Es ist die Aufgabe der vorliegenden Erfindung ein Aktuatorsystem anzugeben, das eine flexiblere Einsetzbarkeit bietet und darüber hinaus weniger aufwendig realisierbar ist.

Die Aufgabe wird durch ein Aktuatorsystem gelöst, das folgendes beinhaltet:
a. wenigstens einen Aktuator, der mindestens einen elektrischen Antriebsmotor und ein Leistungselektronikmodul beinhaltet, an das der Antriebsmotor angeschlossen ist und das von einem räumlich separaten Logikelektronikmodul Ansteuervorgaben empfängt und das entsprechend den empfangenen Ansteuervorgaben elektrische Antriebsenergie an den elektrischen Antriebsmotor des Aktuators überträgt, wobei
b. das Logikelektronikmodul, das dazu ausgebildet ist, eine Einstellvorgabe zu empfangen und der Einstellvorgabe eine Ansteuervorgabe für das Leistungselektronikmodul zuzuordnen, die es an das Leistungselektronikmodul des Aktuators übergibt, wobei das Logikelektronikmodul die Ansteuervorgabe derart zuordnet, dass der Antriebsmotor die Einstellvorgabe einstellt.

Die Erfindung hat den ganz besonderen Vorteil, dass die wesentlichen, zur Steuerung der Aktuatoren erforderliche elektronische Komponenten weitgehend beliebig weit von den Aktuatoren entfernt im Fahrzeug eingebaut werden können. So kann das Logikelektronikmodul beispielsweise an einem geschützten, trockenen und/oder von hohen Temperaturen nicht beeinflussten Raum im Fahrzeug angeordnet sein.

Lediglich das Leistungselektronikmodul ist räumlich in der Nähe der anzusteuernden Antriebsmotore angeordnet. Dies hat den weiteren ganz besonderen Vorteil, dass zwischen dem Logikelektronikmodul und dem Leistungselektronikmodul lediglich eine Übertragung der Ansteuervorgaben ermöglicht sein muss, was beispielsweise über Kabel mit kleinem Querschnitt oder kabellos erfolgen kann.

Insbesondere ist es vorteilhaft nicht erforderlich, zwischen dem Logikelektronikmodul und dem Leistungselektronikmodul Kabel mit großem Querschnitt zu verlegen, um elektrische Antriebsenergie zum Betreiben der Antriebsmotore übertragen zu können. Vielmehr ist es ausreichend, ausschließlich das Leistungselektronikmodul an die entsprechende Energiequelle des Kraftfahrzeugs, wie Lichtmaschine und Batterie, mit Kabeln von ausreichend großem Querschnitt anzuschließen. Hierdurch wird vorteilhaft automatisch eine bessere elektronmagnetische Verträglichkeit (EMV) erreicht. Dies insbesondere deshalb, weil die Kabelstrecken, über die gepulste Ströme verlaufen, kürzer sind, als bei den aus dem Stand der Technik bekannten Anordnungen.

Bei einer ganz besonders vorteilhaften Ausführung empfängt das Leistungselektronikmodul Ansteuervorgaben in Form eines pulsbreitenmodulierten Signals. Es ist auch möglich, dass Ansteuervorgaben in Form von mehreren, simultan oder sequentiell übertragenen, pulsbreitenmodulierten Signalen von dem Logikelektronikmodul an das Leistungselektronikmodul übermittelt werden.

Die Erfindung hat den ganz besonderen Vorteil, dass pulsbreitenmodulierte Signale mit besonders hohen Trägerfrequenzen verwendbar sind, da diese über große Strecken als Ansteuervorgaben lediglich auf geringem elektrischen Spannungsniveau und bei geringen elektrischen Strömen übertragen werden müssen, wobei die Gefahr von Übertragungsfehlern und/oder die Gefahr der Erzeugung elektromagnetischer Störstrahlung, die andere Fahrzeugkomponenten negativ beeinflussen könnte, auf Grund des geringem elektrischen Spannungsniveaus und der geringen elektrischen Ströme gar nicht oder nur in einem geringen Maße besteht. Lediglich auf dem Weg von dem Leistungselektronikmodul zu dem Antriebsmotor fließen dann höhere Ströme, was jedoch im Hinblick auf eine sichere und zuverlässige Ansteuerung der Antriebsmotore keine Rolle spielt, weil der Übertragungsweg innerhalb des Aktuators vergleichsweise kurz ist und/oder weil die Zuführleitung von dem Leistungselektronikmodul zu dem Antriebsmotor durch ein gemeinsames Aktuatorgehäuse, das sowohl das Leistungselektronikmodul, als auch den Antriebsmotor einhaust, abgeschirmt ist.

Die Verwendbarkeit hoher Trägerfrequenzen, von beispielsweise 20 kHz oder mehr, hat den ganz besonderen Vorteil, dass insbesondere niederinduktive Antriebsmotore, die bei einer Ansteuerung mit niedrigeren Trägerfrequenzen zum Ruckeln neigen, verwendet werden können. Niederinduktive Antriebsmotore weisen zumeist Spulen mit einer geringen Windungszahl auf und können daher besonders kompakt, kleinbauend und bauraumsparend ausgebildet sein.

Bei der vorliegenden Erfindung fungiert das Logikelektronikmodul gewissermaßen als Gehirn, das einer Einstellvorgabe, wie beispielsweise einer gewünschten Relativstellung eines Rades relativ zur Karosserie oder einer gewünschten Nockenwellenstellung, aktuatorspezifische Ansteuervorgaben, wie beispielsweise ein pulsbreitenmoduliertes Signal, zuordnet. Die Ansteuervorgaben sind insbesondere solche Signale, die nach einer Verstärkung im Leistungselektronikmodul unmittelbar zur Ansteuerung der Antriebsmotore verwendbar sind oder solche Signale, die von dem Leistungselektronikmodul unmittelbar in Ansteuersignale für die Antriebsmotore umsetzbar sind.

Bei einer besonderen Ausführung ist vorgesehen, dass das Logikelektronikmodul individuell für jeden der angeschlossenen Antriebsmotore Einstellvorgaben empfängt und jeder Einstellvorgabe eine Ansteuervorgabe für das Leistungselektronikmodul zuordnet und an das Leistungselektronikmodul übergibt, wobei das Logikelektronikmodul die Ansteuervorgaben derart zuordnet, dass jeder der Antriebsmotore die ihn betreffenden, empfangenen Einstellvorgaben einstellt.

Eine Ansteuervorgabe kann insbesondere eine Information über eine an einen Antriebsmotor anzulegende elektrische Spannung und/oder über einen zu einem Antriebsmotor zu leitenden elektrischen Strom beinhalten. Es ist auch möglich, dass eine Ansteuervorgabe eine Information über eine zeitliche Folge von an einen Antriebsmotor anzulegenden elektrischen Spannungen und/oder über eine zeitliche Folge von zu einem Antriebsmotor zu leitenden elektrischen Strömen beinhaltet.

Bei einer besonders vorteilhaften Ausführung weisen der Aktuator oder das Leistungselektronikmodul oder der Antriebsmotor wenigstens einen Sensor auf, der eine Zustandsgröße misst und - direkt oder über das Leistungselektronikmodul - an das Logikelektronikmodul übermittelt. Auf diese Weise kann beispielsweise eine Überprüfung stattfinden, ob die übertragenen Ansteuervorgaben ordnungsgemäß umgesetzt wurden oder ob beispielsweise eine Korrektur, insbesondere durch Übermittlung neuer Ansteuervorgaben, erforderlich ist.

Beispielsweise kann die Zustandsgröße eine an dem Antriebsmotor anliegende elektrische Spannung oder eine an der Leistungselektronik anliegende elektrische Spannung oder eine elektrische Stromstärke eines zu dem Antriebsmotor fließenden elektrischen Stroms oder eine elektrische Stromstärke eines zu dem Leistungsmodul fließenden elektrischen Stroms oder eine Leistungsaufnahme des Antriebsmotors oder ein Phasenstrom oder ein Phasenspannung oder eine Temperatur eines Schaltkreises und/oder eine Platinentemperatur oder ein eingestellter Winkel oder eine Temperatur des Antriebsmotors oder eine Temperatur der Wicklung einer Spule des Antriebsmotors oder eine Leistungsaufnahme des Aktuators oder eine Drehzahl einer Aktuatorwelle oder eine Drehstellung einer Aktuatorwelle sein.

Die Messung von einer Zustandsgröße oder vorzugsweise von mehreren unterschiedlichen Zustandsgrößen hat den besonderen Vorteil, dass das Logikelektronikmodul aktuelle Zustände bei der Zuordnung der Ansteuervorgabe an die Einstellvorgabe berücksichtigen kann. Bei einer ganz besonders vorteilhaften Ausführung wird diese Art der Rückkopplung insbesondere zur Realisierung einer Energieverbrauchsoptimierung und/oder zur Realisierung eines Drehmomentausgleichs und/oder zur Realisierung einer Drehmomentbegrenzung von dem Logikelektronikmodul berücksichtigt.

Wie bereits erwähnt, können das Logikelektronikmodul und der Aktuator vorteilhaft dazu ausgebildet und bestimmt sein, räumlich getrennt an voneinander unterschiedlichen Orten eines Kraftfahrzeugs eingebaut zu werden. Alternativ oder zusätzlich kann vorteilhaft vorgesehen sein, dass das Logikelektronikmodul und der Aktuator kein gemeinsames Gehäuse aufweisen und/oder dass das Logikelektronikmodul und der Aktuator in unterschiedlichen und/oder voneinander räumlich separaten Gehäusen angeordnet sind.

Bei einer besonders vorteilhaften Ausführung sind das Logikelektronikmodul und der Aktuator voneinander galvanisch getrennt. Insbesondere kann vorteilhaft vorgesehen sein, dass das Logikelektronikmodul ein Bauteil zur galvanischen Trennung des Logikelektronikmoduls von dem Leistungselektronikmodul aufweist. Bei dem Bauteil kann es sich beispielsweise um einen Optokoppler oder einen Transformator handeln.

Das Logikelektronikmodul kann vorteilhaft dazu ausgebildet sein, an eine erste Energiequelle mit einer ersten Versorgungsspannung, insbesondere einer Versorgungsspannung von 12V, angeschlossen zu werden, während das Leistungselektronikmodul dazu ausgebildet sein kann, an eine zweite Energiequelle mit einer zweiten Versorgungsspannung, insbesondere einer Versorgungsspannung von 48V, angeschlossen zu werden. Insbesondere bei einer solchen Ausführung ist es zur Vermeidung des nachteiligen Anschlusses des Aktuatorsystems an mehrere Massepunkte von besonderem Vorteil, wenn das Logikelektronikmodul einerseits und der Aktuator und/oder das Leistungselektronikmodul andererseits voneinander galvanisch getrennt sind.

Bei einer besonderen Ausführung ist das Logikelektronikmodul dazu ausgebildet und bestimmt, an eine Fahrzeugsteuerungselektronik angeschlossen zu werden und von dieser Einstellvorgaben zu empfangen. Alternativ oder zusätzlich kann auch vorgesehen sein, dass das Logikelektronikmodul dazu ausgebildet und bestimmt ist, an einen zentralen Fahrzeugcomputer angeschlossen zu werden und von diesem Einstellvorgaben zu empfangen.

Vorteilhaft kann der Aktuator ein dem Antriebsmotor triebtechnisch nachgeschaltetes Getriebe aufweisen, das insbesondere als Spannungswellengetriebe ausgebildet sein kann. Die Verwendung eines Spannungswellengetriebes ist deshalb besonders vorteilhaft, weil es flexibel einsetzbar ist und ein spielfreies und sehr präzises Einstellen ermöglicht.

Bei einer ganz besonders vorteilhaften Ausführung sind die an das Leistungselektronikmodul angeschlossenen Antriebsmotore baugleich ausgebildet. Dies hat den ganz besonderen Vorteil, dass bei der Zuordnung der erforderlichen Ansteuervorgaben keine unterschiedlichen antriebsmotorspezifischen Randbedingungen berücksichtigt werden müssen. Vielmehr kann so jeder der Antriebsmotore zwar in aller Regel auf der Basis individueller Ansteuervorgaben, jedoch in gleicher Art und Weise angesteuert werden, was die Komplexität des Gesamtsystems sehr reduziert.

Bei einer ganz besonderen Ausführung ist wenigstens ein Aktuator des Aktuatorsystems Teil eines aktiven Fahrwerks. Insbesondere kann der Aktuator dazu ausgebildet und angeordnet sein, einen Höhenstand eines Rades relativ zu einer Fahrzeugkarosserie einzustellen. Insbesondere kann vorteilhaft vorgesehen sein, dass alle an das Logikelektronikmodul angeschlossenen Aktuatoren Teil eines aktiven Fahrwerks sind. Hierbei ist es, insbesondere zur Reduktion der Komplexität des Aktuatorsystems von besonderem Vorteil, wenn das Logikelektronikmodul dazu ausgebildet ist, ausschließlich Einstellvorgaben zu empfangen und/oder zu verarbeiten, die das Fahrwerk betreffen.

Für den Fall, dass der Aktuator Teil eines aktiven Fahrwerks ist, kann die Einstellvorgabe beispielsweise einen Höhenstand eines Rades relativ zu einer Fahrzeugkarosserie und/oder eine Relativposition wenigstens zweier Räder, insbesondere zweier Räder einer Fahrzeugachse, zueinander betreffen.

Bei einer andern vorteilhaften Ausführung ist wenigstens ein Aktuator des Aktuatorsystems Teil eines Verbrennungsmotors. Hierbei kann insbesondere vorteilhaft vorgesehen sein, dass wenigstens ein Antriebsmotor dazu ausgebildet und angeordnet ist, die Stellung einer Nockenwelle oder einer Klappe oder das Volumen eines Hubraums einzustellen.

Bei einer besonderen Ausführung sind alle an das Leistungselektronikmodul angeschlossenen ist wenigstens ein Aktuator des Aktuatorsystems Teil eines Verbrennungsmotors, wobei insbesondere vorgesehen sein kann, dass das Logikelektronikmodul dazu ausgebildet ist, ausschließlich Einstellvorgaben zu empfangen und/oder zu verarbeiten, die Einstellungen des Verbrennungsmotors betreffen. So kann die Einstellvorgabe beispielsweise bestimmte aktuell geforderte Nockenwellenstellung oder eine aktuell erforderliche Hubraumeinstellung oder eine aktuell erforderliche Klappenstellung betreffen. Ein zentraler Fahrzeugcomputer kann beispielsweise eine Anforderung eines bestimmten Hubraumvolumens als Einstellvorgabe an das Logikelektronikmodul übermitteln, das dieser Einstellvorgabe entsprechende Ansteuervorgaben für das Leistungselektronikmodul zur unmittelbaren Ansteuerung des Antriebsmotors bzw. der Antriebsmotore zuordnet.

Kurz gesagt bildet das Logikelektronikmodul das Gehirn, das weiß, wie eine bestimmte Einstellvorgabe in eine Ansteuervorgabe umgesetzt werden muss, damit die bildlich gesprochen als Muskel fungierende Aktuator die geforderte Einstellung vornehmen kann.

Zur Umsetzung dieses Erfindungsgedanken kann vorteilhaft insbesondere vorgesehen sein, dass das Leistungselektronikmodul keine programmierbaren und/oder programmierten elektronischen Bauteile beinhaltet. Insbesondere braucht das Leistungselektronikmodul auch keine Datenspeicherelemente zu beinhalten. Vielmehr kann das Leistungselektronikmodul auf diese Weise mit unkomplizierten elektronischen Bauteilen einfach und robust sowie störungsunanfällig ausgebildet werden.

Von besonderem Vorteil ist ein Fahrzeug, das wenigstens ein erfindungsgemäßes Aktuatorsystem beinhaltet. Natürlich können in einem Fahrzeug auch mehrere der erfindungsgemäßen Aktuatorsysteme vorhanden sein. Beispielsweise kann ein Aktuatorsystem zur Ansteuerung eines aktiven Fahrwerks dienen oder Teil eines aktiven Fahrwerks sein, während ein anders Aktuatorsystem dazu dient, gezielt Einstellungen an einem Verbrennungsmotor vorzunehmen.

In vorteilhafter Weise kann der der Aktuator Teil einer Fahrzeugsitzverstellung sein. Insbesondere kann vorteilhaft vorgesehen sein, dass mehrere an das Logikelektronikmodul angeschlossene Aktuatoren Teil einer Fahrzeugsitzverstellung sind.

Von ganz besonderem Vorteil ist ein Fahrzeug, das mehrere erfindungsgemäße Aktuatorsysteme beinhaltet, wobei die Logikmodule und/oder die Leistungselektronikmodule der mehreren Aktuatorsysteme baugleich ausgebildet sind. Auf diese Weise ist es vorteilhaft ermöglicht, Gleichteile zu verwenden, wobei beispielsweise lediglich unterschiedliche Programmierungen der Logikelektronikmodule erforderlich sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein erstes Ausführungsbeispiel eines erfindungsgemäßen Aktuatorsystems, und
- Fig. 2: ein zweites Ausführungsbeispiel eines erfindungsgemäßen Aktuatorsystems.

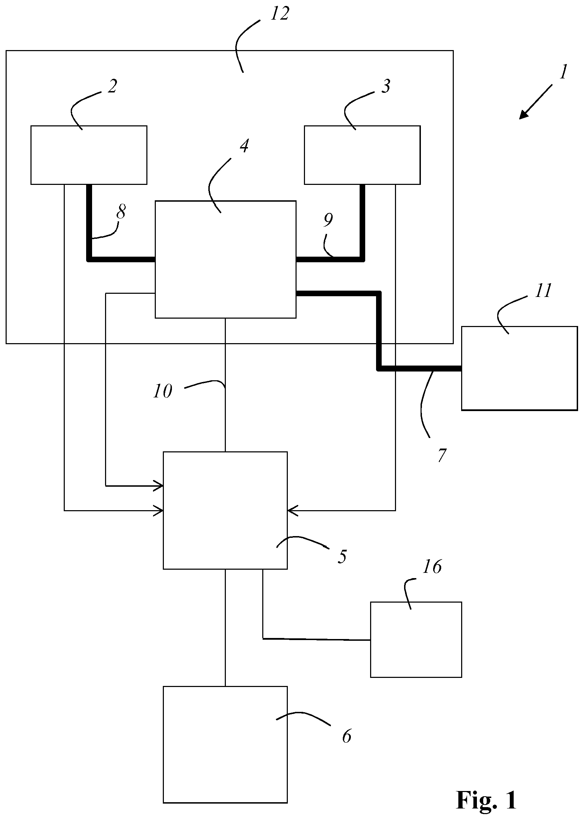

Figur 1 zeigt ein erstes Ausführungsbeispiel eines erfindungsgemäßen Aktuatorsystems 1 für ein Kraftfahrzeug. Das Aktuatorsystem beinhaltet einen ersten Antriebsmotor 2 und einen zweiten Antriebsmotor 3, die an ein Leistungselektronikmodul 4 angeschlossen sind. Die Antriebsmotore 2, 3 und das Leistungselektronikmodul 4 sind Bestandteiles eines Aktuators 12.

Das Leistungselektronikmodul 4 empfängt über eine Kabelverbindung 10 Ansteuervorgaben von einem Logikelektronikmodul 5 und überträgt entsprechend den empfangenen Ansteuervorgaben elektrische Antriebsenergie an die elektrischen Antriebsmotore 2, 3. Das Leistungselektronikmodul 4 ist zusammen mit den Antriebsmotoren 2, 3 in einem eigenen Aktuatorgehäuse räumlich separat von dem Logikelektronikmodul 5, das ein eigenes Gehäuse aufweist, angeordnet.

Das Logikelektronikmodul 5 ist dazu ausgebildet, eine Einstellvorgabe, beispielsweise von einem zentralen Fahrzeugcomputer 6, zu empfangen und dieser eine Ansteuervorgabe für das Leistungselektronikmodul 4 zuzuordnen und an das Leistungselektronikmodul 4 zu übergeben, wobei das Logikelektronikmodul 5 die Ansteuervorgabe derart zuordnet, dass wenigstens einer der Antriebsmotore 2, 3 die Einstellvorgabe einstellt. Das Leistungselektronikmodul 4 ist über eine ausreichend dimensionierte Leitung 7 an eine elektrische Energieversorgung 11, insbesondere eine 48V Energieversorgung, angeschlossen, so dass das Leistungselektronikmodul 4 die Antriebsmotore 2, 3 über ausreichend dimensionierte weitere elektrische Leitungen 8, 9 entsprechend den Ansteuervorgaben mit elektrischer Antriebsenergie versorgen kann. Das Logikelektronikmodul 5 ist an eine andere elektrische Energieversorgung 16, insbesondere eine 12V Energieversorgung, angeschlossen.

Die Kommunikation zwischen dem Logikelektronikmodul 5 und dem Leistungselektronikmodul 4 erfordert hingegen lediglich eine Kabelverbindung 10 mit niedrigem Querschnitt, weil keine großen elektrischen Leistungen übertragen werden müssen. Alternativ kann die Kommunikation sogar kabellos über eine Funkverbindung erfolgen.

Jeder der Antriebsmotore 2, 3 sowie das Leistungselektronikmodul 4 weisen jeweils wenigstens einen Sensor (nicht dargestellt) auf, der wenigstens eine Zustandsgröße misst und über Signalleitungen 13, 14, 15 an das Logikelektronikmodul 5 übermittelt.

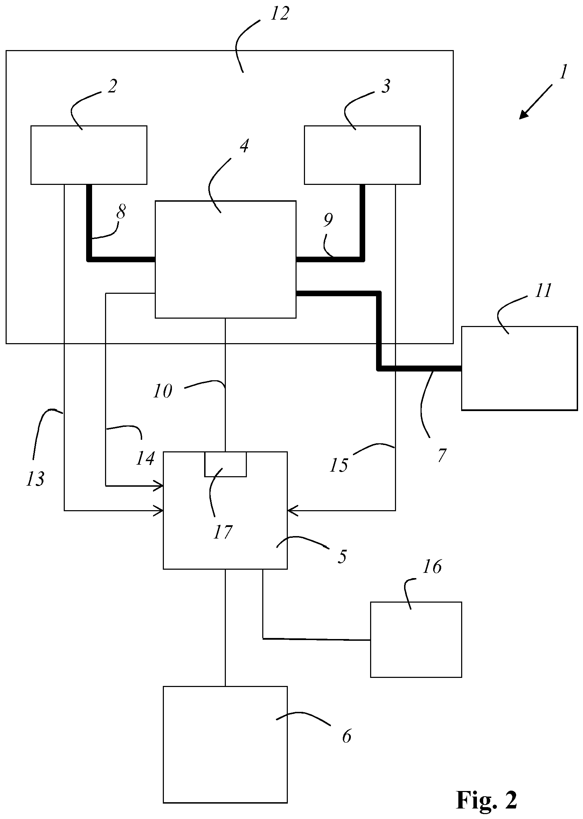

Figur 2 zeigt ein zweites Ausführungsbeispiel eines erfindungsgemäßen Aktuatorsystems 1 für ein Kraftfahrzeug. Das Aktuatorsystem 1 unterscheidet sich von dem in Fig. 1 dargestellten Aktuatorsystem 1 dadurch, dass das Logikelektronikmodul 5 ein Bauteil 17 zur galvanischen Trennung des Logikelektronikmoduls 5 von dem Leistungselektronikmodul 4 aufweist.
Zusätzlich kann das Logikelektronikmodul 5 auch derartige Bauteile zur galvanischen des Logikelektronikmoduls 5 bezüglich der Signalleitungen 13, 14, 15 aufweisen. Es ist alternativ auch möglich, dass die Sensoren jeweils ein derartiges Bauteil beinhalten.

### Bezugszeichenliste:

- 1: Aktuatorsystem
- 2: Antriebsmotor
- 3: Antriebsmotor
- 4: Leistungselektronikmodul
- 5: Logikelektronikmodul
- 6: Zentraler Fahrzeugcomputer
- 7: Leitungen
- 8: Weitere elektrische Leitung
- 9: Weitere elektrische Leitung
- 10: Kabelverbindung
- 11: Energieversorgung
- 12: Aktuator
- 13: Signalleitung
- 14: Signalleitung
- 15: Signalleitung
- 16: andere Energieversorgung
- 17: Bauteil zur galvanischen Trennung

## Patentansprüche

1. Aktuatorsystem für ein Kraftfahrzeug beinhaltend:
a. wenigstens einen Aktuator, der mindestens einen elektrischen Antriebsmotor und ein Leistungselektronikmodul beinhaltet, an das der Antriebsmotor angeschlossen ist und das von einem räumlich separaten Logikelektronikmodul Ansteuervorgaben empfängt und das entsprechend den empfangenen Ansteuervorgaben elektrische Antriebsenergie an den elektrischen Antriebsmotor des Aktuators überträgt, wobei
b. das Logikelektronikmodul, das dazu ausgebildet ist, eine Einstellvorgabe zu empfangen und der Einstellvorgabe eine Ansteuervorgabe für das Leistungselektronikmodul zuzuordnen, die es an das Leistungselektronikmodul des Aktuators übergibt, wobei das Logikelektronikmodul die Ansteuervorgabe derart zuordnet, dass der Antriebsmotor die Einstellvorgabe einstellt.

2. Aktuatorsystem nach Anspruch 1, **dadurch gekennzeichnet, dass**
a. das Leistungselektronikmodul Ansteuervorgaben in Form eines pulsbreitenmodulierten Signals empfängt, und/oder dass
b. das Leistungselektronikmodul Ansteuervorgaben in Form mehrerer unterschiedlicher pulsbreitenmodulierter Signale empfängt.

3. Aktuatorsystem nach Anspruch 1 oder 2, **dadurch gekennzeichnet, dass**
a. das Logikelektronikmodul und der Aktuator voneinander galvanisch getrennt sind und/oder dass
b. das Logikelektronikmodul und das Leistungselektronikmodul voneinander galvanisch getrennt sind und/oder dass
c. das Logikelektronikmodul ein Bauteil zur galvanischen Trennung des Logikelektronikmoduls von dem Leistungselektronikmodul aufweist.

4. Aktuatorsystem nach einem der Ansprüche 1 bis 3, **dadurch gekennzeichnet, dass** das Logikelektronikmodul dazu ausgebildet ist, an eine erste Energiequelle mit einer ersten Versorgungsspannung, insbesondere einer Versorgungsspannung von 12V, angeschlossen zu werden, während das Leistungselektronikmodul dazu ausgebildet ist, an eine zweite Energiequelle mit einer zweiten Versorgungsspannung, insbesondere einer Versorgungsspannung von 48V, angeschlossen zu werden.

5. Aktuatorsystem nach einem der Ansprüche 1 bis 4, **dadurch gekennzeichnet, dass** das Leistungselektronikmodul keine programmierbaren und/oder programmierten elektronischen Bauteile und/oder Datenspeicherelemente beinhaltet.

6. Aktuatorsystem nach einem der Ansprüche 1 bis 5, **dadurch gekennzeichnet, dass**
a. der Aktuator mehrere Antriebsmotore beinhaltet, die an das Leistungselektronikmodul angeschlossen sind, oder dass der Aktuator mehrere baugleiche Antriebsmotore beinhaltet, die an das Leistungselektronikmodul angeschlossen sind, oder dass
b. der Aktuator mehrere Antriebsmotore beinhaltet, die an das Leistungselektronikmodul angeschlossen sind, oder dass der Aktuator mehrere baugleiche Antriebsmotore beinhaltet, die an das Leistungselektronikmodul angeschlossen sind, wobei
i. das Leistungselektronikmodul individuell für jeden Antriebsmotor Ansteuervorgaben von dem Logikelektronikmodul empfängt und an die angeschlossenen Antriebsmotore, insbesondere unabhängig voneinander, entsprechend den empfangenen Ansteuervorgaben elektrische Antriebsenergie überträgt und/oder wobei
ii. das Logikelektronikmodul individuell für jeden der angeschlossenen Antriebsmotore Einstellvorgaben empfängt und jeder Einstellvorgabe eine Ansteuervorgabe für das Leistungselektronikmodul zuordnet und an das Leistungselektronikmodul übergibt, wobei das Logikelektronikmodul die Ansteuervorgaben derart zuordnet, dass jeder der Antriebsmotore die ihn betreffenden Einstellvorgaben einstellt.

7. Aktuatorsystem nach einem der Ansprüche 1 bis 6, **dadurch gekennzeichnet, dass** das Logikelektronikmodul keine Antriebsenergie zum Betreiben des elektrischen Antriebsmotors an das Leistungselektronikmodul überträgt.

8. Aktuatorsystem nach einem der Ansprüche 1 bis 7, **dadurch gekennzeichnet, dass**
a. der Aktuator oder das Leistungselektronikmodul oder der Antriebsmotor wenigstens einen Sensor aufweist, der wenigstens eine Zustandsgröße misst und an das Logikelektronikmodul übermittelt und/oder dass
b. der Aktuator oder das Leistungselektronikmodul oder der Antriebsmotor wenigstens einen Sensor aufweist, der wenigstens eine Zustandsgröße misst und an das Logikelektronikmodul übermittelt, wobei die Zustandsgröße
i. eine an dem Antriebsmotor anliegende elektrische Spannung ist oder
ii. eine an der Leistungselektronik anliegende elektrische Spannung ist oder
iii. eine elektrische Stromstärke eines zu dem Antriebsmotor fließenden elektrischen Stroms ist oder
iv. eine elektrische Stromstärke eines zu dem Leistungsmodul fließenden elektrischen Stroms ist oder
v. eine Leistungsaufnahme des Antriebsmotors ist oder
vi. ein Phasenstrom ist oder
vii. ein Phasenspannung ist oder
viii. eine Temperatur eines Schaltkreises und/oder eine Platinentemperatur ist, oder
ix. ein eingestellter Winkel ist oder
x. eine Temperatur des Antriebsmotors ist oder
xi. eine Temperatur der Wicklung einer Spule des Antriebsmotors ist oder
xii. eine Leistungsaufnahme des Aktuators ist oder
xiii. eine Drehzahl einer Aktuatorwelle ist oder
xiv. eine Drehstellung einer Aktuatorwelle ist.

9. Aktuatorsystem nach Anspruch 8, **dadurch gekennzeichnet, dass**
a. der Aktuator die gemessene Zustandsgröße direkt oder über das Leistungselektronikmodul an das Logikelektronikmodul übermittelt, und/oder dass
b. der Aktuator die gemessene Zustandsgröße über einen Übertragungsweg an das Logikelektronikmodul übermittelt, der nicht der Übertragungsweg für die Ansteuervorgaben ist und/oder dass
c. das Logikelektronikmodul die Zustandsgröße bei der Zuordnung der Ansteuervorgabe berücksichtigt, und/oder dass
d. das Logikelektronikmodul die Zustandsgröße bei der Zuordnung der Ansteuervorgabe zur Realisierung einer Energieverbrauchsoptimierung und/oder zur Realisierung eines Drehmomentausgleichs und/oder zur Realisierung einer Drehmomentbegrenzung berücksichtigt.

10. Aktuatorsystem nach einem der Ansprüche 1 bis 9, **dadurch gekennzeichnet, dass**
a. der Aktuator und das Logikelektronikmodul dazu ausgebildet und bestimmt sind, räumlich getrennt an voneinander unterschiedlichen Orten eines Kraftfahrzeuges eingebaut zu werden, und/oder dass
b. der Aktuator und das Logikelektronikmodul kein gemeinsames Gehäuse aufweisen und/oder dass
c. das Leistungselektronikmodul und der Antriebsmotor einerseits und das Logikelektronikmodul andererseits in unterschiedlichen und/oder voneinander räumlich separaten Gehäusen angeordnet sind und/oder dass
d. der Aktuator ein Gehäuse aufweist, in dem sowohl der Antriebsmotor, als auch das Leistungselektronikmodul angeordnet sind, und/oder dass
e. der Aktuator ein dem Antriebsmotor triebtechnisch nachgeschaltetes Getriebe aufweist, oder dass der Aktuator ein dem Antriebsmotor triebtechnisch nachgeschaltetes Spannungswellengetriebe aufweist.

11. Aktuatorsystem nach einem der Ansprüche 1 bis 10, **dadurch gekennzeichnet, dass**
a. dass Logikelektronikmodul dazu ausgebildet und bestimmt ist, an eine Fahrzeugsteuerungselektronik angeschlossen zu werden und von dieser Einstellvorgaben zu empfangen, und/oder dass
b. das Logikelektronikmodul dazu ausgebildet und bestimmt ist, an einen zentralen Fahrzeugcomputer angeschlossen zu werden und von diesem Einstellvorgaben zu empfangen.

12. Aktuatorsystem nach einem der Ansprüche 1 bis 11, **dadurch gekennzeichnet, dass**
a. an das Logikmodul mehrere Aktuatoren mit jeweils einem Leistungselektronikmodul und jeweils wenigstens einem Antriebsmotor angeschlossen sind, und/oder dass
b. an das Logikmodul mehrere Aktuatoren mit jeweils einem Leistungselektronikmodul und jeweils wenigstens einem Antriebsmotor angeschlossen sind, wobei jedes Leistungselektronikmodul von dem räumlich separaten Logikelektronikmodul Ansteuervorgaben, insbesondere in Form wenigstens eines pulsbreitenmodulierten Signals, empfängt und entsprechend den empfangenen Ansteuervorgaben jeweils elektrische Antriebsenergie an den jeweiligen elektrischen Antriebsmotor überträgt, oder wobei jedes Leistungselektronikmodul von dem räumlich separaten Logikelektronikmodul Ansteuervorgaben, insbesondere in Form wenigstens eines pulsbreitenmodulierten Signals, empfängt und entsprechend den empfangenen Ansteuervorgaben jeweils elektrische Antriebsenergie an den jeweiligen elektrischen Antriebsmotor überträgt und/oder dass
c. an das Logikmodul mehrere Aktuatoren mit jeweils einem Leistungselektronikmodul und jeweils wenigstens einem Antriebsmotor angeschlossen sind, wobei das Logikelektronikmodul dazu ausgebildet ist, mehrere Einstellvorgaben für die mehreren Aktuatoren zu empfangen und jeder Einstellvorgabe individuell eine Ansteuervorgabe für das Leistungselektronikmodul jedes Aktuators zuzuordnen, die es jeweils an das Leistungselektronikmodul des jeweiligen Aktuators übergibt, wobei das Logikelektronikmodul die Ansteuervorgabe derart zuordnet, dass der jeweilige Antriebsmotor die Einstellvorgabe einstellt und/oder dass
d. an das Logikmodul mehrere Aktuatoren mit jeweils einem Leistungselektronikmodul und jeweils wenigstens einem Antriebsmotor angeschlossen sind, wobei das Logikelektronikmodul Zustandsgrößen von den mehreren Aktuatoren empfängt bei der jeweiligen Zuordnung der jeweiligen Ansteuervorgabe berücksichtigt, oder wobei das Logikelektronikmodul Zustandsgrößen von den mehreren Aktuatoren empfängt und die Zustandsgröße eines Aktuator bei der Zuordnung der Ansteuervorgabe für einen anderen Aktuator, insbesondere unter Verrechnung mit einer Zustandsgröße des anderen Aktuators, berücksichtigt.

13. Aktuatorsystem nach einem der Ansprüche 1 bis 12, **dadurch gekennzeichnet, dass**
a. der Aktuator Teil eines aktiven Fahrwerks ist oder dass
b. der Aktuator Teil eines aktiven Fahrwerks und dazu ausgebildet ist, einen Höhenstand eines Rades relativ zu einer Fahrzeugkarosserie einzustellen oder dass
c. mehrere an das Logikelektronikmodul angeschlossene Aktuatoren Teil eines aktiven Fahrwerks sind, oder dass
d. mehrere an das Logikelektronikmodul angeschlossene Aktuatoren Teil eines aktiven Fahrwerks sind und das Logikelektronikmodul dazu ausgebildet ist, ausschließlich Einstellvorgaben zu empfangen und/oder zu verarbeiten, die das Fahrwerk betreffen, oder dass
e. mehrere an das Logikelektronikmodul angeschlossene Aktuatoren Teil eines aktiven Fahrwerks sind und das Logikelektronikmodul dazu ausgebildet ist, ausschließlich Einstellvorgaben zu empfangen und/oder zu verarbeiten, die das Fahrwerk betreffen, wobei die Einstellvorgabe einen Höhenstand eines Rades relativ zu einer Fahrzeugkarosserie betrifft und/oder dass die Einstellvorgabe eine Relativposition wenigstens zweier Räder, insbesondere zweier Räder einer Fahrzeugachse, betrifft, oder das
f. der Aktuator Teil einer Fahrzeugsitzverstellung ist oder dass mehrere an das Logikelektronikmodul angeschlossene Aktuatoren Teil einer Fahrzeugsitzverstellung sind.

14. Aktuatorsystem nach einem der Ansprüche 1 bis 13, **dadurch gekennzeichnet, dass**
a. der Aktuator Teil eines Verbrennungsmotors ist oder dass
b. der Aktuator Teil eines Verbrennungsmotors und dazu ausgebildet und angeordnet ist, die Stellung einer Nockenwelle oder eine Klappe oder das Volumen eines Hubraumes einzustellen, oder dass
c. mehrere an das Logikelektronikmodul angeschlossene Aktuatoren Teil eines Verbrennungsmotors sind, oder dass
d. mehrere an das Logikelektronikmodul angeschlossene Aktuatoren Teil eines Verbrennungsmotors sind und das Logikelektronikmodul dazu ausgebildet ist, ausschließlich Einstellvorgaben zu empfangen und/oder zu verarbeiten, die Einstellungen des Verbrennungsmotors betreffen, oder dass
e. mehrere an das Logikelektronikmodul angeschlossene Aktuatoren Teil eines Verbrennungsmotors sind und das Logikelektronikmodul dazu ausgebildet ist, ausschließlich Einstellvorgaben zu empfangen und/oder zu verarbeiten, die Einstellungen des Verbrennungsmotors betreffen, wobei die Einstellvorgabe eine Nockenwelleneinstellung betrifft und/oder eine Hubraumeinstellung betrifft und/oder eine Klappenstellung betrifft.

15. Fahrzeug, das
a. wenigstens ein Aktuatorsystem nach einem der Ansprüche 1 bis 14 beinhaltet, oder das
b. mehrere Aktuatorsysteme nach einem der Ansprüche 1 bis 14 beinhaltet, oder das
c. mehrere Aktuatorsysteme nach einem der Ansprüche 1 bis 14 beinhaltet, wobei die Logikelektronikmodule und/oder die Leistungselektronikmodule und/oder die Aktuatoren der mehreren Aktuatorsysteme baugleich ausgebildet sind.
